(19) Europäisches Patentamt
European Patent Office
Office européen des brevets

(11) Publication number: **0 316 918**
**A2**

(12) **EUROPEAN PATENT APPLICATION**

(21) Application number: **88119146.4**

(22) Date of filing: **17.11.88**

(51) Int. Cl.⁴: **C07C 69/54 , C07C 67/08 , C07C 67/11 , C07C 67/26 , C07C 67/14 , C08F 120/20 , C08F 222/14 , C07C 67/03**

(30) Priority: **17.11.87 CS 8242/87**
**02.12.87 CS 8776/87**

(43) Date of publication of application:
**24.05.89 Bulletin 89/21**

(84) Designated Contracting States:
**BE DE FR GB IT NL SE**

(71) Applicant: **Ceskoslovenska akademie ved**
**Narodni trida 3**
**Praha 1(CS)**

(72) Inventor: **Lukas, Rudolf, CSc**
**Doubravinova 1/219**
**Praha 6(CS)**
Inventor: **Sevcik, Stanislav, CSc.**
**Na Petrinach 307**
**Praha 6(CS)**
Inventor: **Poleckova, Vera**
**U novych domu 527/1**
**Praha 4(CS)**
Inventor: **Pacovsky, Vladimir**
**Cerveny Ujezd 157**
**Unhost(CS)**
Inventor: **Mrazek, Zdenek**
**U Santosky 5**
**Praha 5(CS)**
Inventor: **Nohova, Jaroslava**
**Ve Smeckach 37**
**Praha 6(CS)**
Inventor: **Pradova, Olga**
**Tuniska 633**
**Praha 6(CS)**
Inventor: **Malik, Milos**
**Polisna 219**
**Valasské Meririci(CS)**
Inventor: **Kolinsky, Miloslav, Dr.-Ing.**
**Slikova 34/303**
**Praha 6(CS)**

(74) Representative: **Patentanwälte Beetz sen. - Beetz jun. Timpe - Siegfried - Schmitt-Fumian- Mayr**
**Steinsdorfstrasse 10**
**D-8000 München 22(DE)**

(54) **Capryloyloxyalkyl acrylates, polymers and copolymers thereof and their preparation.**

EP 0 316 918 A2

Xerox Copy Centre

(57) This invention relates to capryloyloxyalkyl acrylates of the general formula
$CH_2=CH\text{-}CO\text{-}O\text{-}R\text{-}O\text{-}CO\text{-}(CH_2)_6\text{-}CH_3$,
wherein R is an alkylene group of 2 to 6 carbon atoms, and their polymers and copolymers containing structure units of the general formula

$$\begin{array}{l} -CH_2-\underset{|}{C}H- \\ \quad\quad\;\; CO-O-R-O-CO-(CH_2)_5-CH_3, \end{array}$$

where R are identical or different alkylene groups as defined above, and the polymer contains either 100 % of the capryloyloxyalkyl acrylate structure units or additional vinyl monomer and particularly vinyl chloride structure units in the main chain or side chains.

The invention also pertains to methods for the preparation of capryloyloxyalkyl acrylates corresponding intermediates and to methods for producing the polymers and copolymers containing capryloyloxyalkyl acrylate structure units either by polymerization or copolymerization of capryloyloxyalkyl acrylates with the respective vinyl comonom ers or by polymerization of the vinyl comonomers, particularly vinyl chloride, in the presence of a poly(capryloyloxyalkyl acrylate).

The invention is particularly applicable to the production of new types of plasticized PVC where migration and extraction of the plasticizing component is excluded.

## Capryloyloxyalkyl acrylates, polymers and copolymers thereof and their preparation

The invention pertains to capryloyloxyalkyl acrylates and their polymers and copolymers and to methods for the preparation of these monomers and polymers.

Homopolymers and copolymers based on polymers containing ester groups, which serve as plasticizing components or modifications of flow properties for polymers, are indispensable components of polymeric mixtures. They have a special importance with poly(vinyl chloride) (PVC), 2/3 of the world production of which is worked into hard articles (flow modifiers and similar additives being used in thise case), and the remaining 1/3 of the production is processed into plasticized products. The main part of plasticized PVC is still produced in the classical way, i.e. by means of low-molecular weight compounds which cause the required changes in physical and physicochemical properties of polymers depending on their content in the polymer. However, the systems PVC - low-molecular weight plasticizer are in some cases unsuitable for various reasons, e.g. for hygienic aspects, insufficient service life or loss of parameters of earth-insulation films, roofings, films for agriculture, and others. The most frequent cause of deteriorated quality of plasticized products and/or their reduced life is the gradual loss of plasticizing components which results in a contraction connected with the formation of mechanical stress in the polymer matrix. The young modulus of such polymers increases parallel with decreasing plasticizer content, causing a further increase of the stress in the material, which worsens the mechanical properties and increases liability to failure. The loss of plasticizers is often accompanied also with a loss of other components, i.e. light stabilizers, the decrease or complete absence of which usually leads to a further deterioration of properties and/or to a substantial reduction of life.

PVC requires high processing temperatures (about 180° C), particularly in working of hard articles. With respect to the low thermal stability of PVC it is necessary to add stbilizers to the mixtures which effectively limits the undesired decomposition reactions. However, the stabilizers mostly represent a considerable load for the environment in connection with the liquidation of wastes and increase the costs of processing with respect to their price.

The above mentioned shortcomings of PVC are a worldwide problem, and therefore, they are the point of interest both of PVC producers and processing industry.

Classical types of most often used plasticizers are the phthalates, above all di-(2-ethylhexyl) phthalate (dioctyl phthalate), esters of aliphatic dicarboxylic acids (e.g. dioctyl adipate), and phosphates (namely tricresyl phosphate). Articles plasticized with these compounds exhibit blooming and migration. The investigation of the relationship between chemical structure and migration (JP-B-58 19 348) revealed that the original types of plasticizers may be modified by enlarging their acid and/or alcohol component (JP-B-58 91 750, 58 129 040, 58 59 945, 59 15 436, 59 22 950, 59 74 144, 58 47 046 and 57 03 846; US-A-4 167 504 and 4 327 021). The development of these plasticizers led to the introduction of polymeric plasticizers based on polyesters (Whittington W.H., Plast. Compd. 1984, 32; JP-B-59 98 155; US-A-4 478 961; Deanin D., Zhong-Bai Z., J. Vinyl Technol. 1984, 18; Bender M.H., Lutz J.T., Jr., J. Vinyl Technol. 1979, 197) polyurethanes (US-A-4 210 730 and 4 212 957; JP-B-59 33 345 and 59 189 157), copolymers or ethylene with vinyl acetate or also with carbon monoxide (JP-B-59 33 345, 58 103 547, 59 68 362, 59 36 153) and on rubbers (DE-A-3 331 220). Also the application of mixtures of polymers and/or copolymers, namely block copolymers, proved effective (US-A- 4 210 730 and 4 212 957; JP-B-59 68 362 and 59 36 153).

Another trend of development is to reduce the migration of low-molecular mass plasticizers by addition of oxides, salts and silicates of various metals either as such or in admixture with waxes (JP-B-59 223 743) or fatty acids (JP-B-48 173 137 and 57 76 057). As other additives may be used multifunctional amides (JP-B-58 89 636), and silicone derivatives (JP-B-59 33 343 and 59 08 744). Also combinations of plasticizers (low-molecular mass and polymeric) (JP-B-60 53 152, 59 33 345, 59 105 045; GB-A- 2 025 431) lead to a reduced migration and increased resistance towards extraction of plasticizers by water or organic liquids (GB-A-2 025 431).

The migration of plasticizers can also be reduced by additional cross-linking (JP-B-59 33 344 and 57 164 140), e.g. by reaction of -OH groups, introduced into PVC by copolymerization with 2-hydroxypropyl acrylate, with diisocyanates (JP-B-59 33 344). Special cases of cross-linking are the surface cross-linkings caused by plasma (JP-B-55 13 753 and 55 16 059; GB-A-2 027 038 and 2 025 981), sometimes in the presence of a cross-linking agent by UV radiation (JP-B-54 64 573). The surface may be also provided with a protective layer from another polymer (JP-B-60 143 956, 58 46 961, 59 138 239, 59 74 178 and 56 129 233; GB-B-2 137 268).

A special measure is the so-called internal plasticization based on the preparation of a copolymer of the plasticizing component with vinyl chloride. Typical examples are terpolymers containing 50 to 80 % vinyl

chloride, 3 to 47 % alkyl acrylate, and 47 to 7 % bis(alkyl)vinylphosphate, sometimes blended with other copolymers, e.g. ethylene - carbon monoxide - vinyl acetate (JP-B-57 147 538) or polyurethane (US-A-4 350 792) or chlorinated polyethylene, which are suited for roofings, etc. The terpolymers of vinyl chloride with alkyl acrylates and bis(alkyl)vinylphosphates are also used for finishing and protection of surfaces in the car industry (US-A-4 343 856 and 4 496 628).

A further type of plasticized PVC consists of a copolymer of vinyl chloride, alkyl acrylate, and maleate or fumarate. Also block copolymers composed of alternating segments of PVC and polyester or polyether attain the desired properties of plasticized PVC without problems caused by migration of low-molecular mass plasticizers (the block copolymers being prepared from PVC having terminal -OH groups, which introduce, by the reaction with diisocyanates), isocyanate groups into PVC which are capable to react with polyesters or polyethers (US-A-4 248 979).

Vinyl chloride alone or in admixture with other comonomers may be grafted onto several hompolymers or copolymers, e.g. polyurethanes (JP-A-59 11 347), copolymers of ethylene with vinyl acetate (JP-B-58 49 154, 58 54 937, 58 57 412 and 58 22 066), mixtures of polyurethanes and ethylene - vinyl acetate copolymers (JP-B-58 93 712 and 59 93 712), or, on the contrary, other monomers, e.g. acrylates, may be grafted onto PVC (US-A-4 480 076 -preparation of flexible polymers). Soft polymers are formed by grafting of polyurethanes prepared from adipate and aliphatic diisocyanate with a mixture of vinyl chloride and butyl acrylate or vinylidene chloride.

US-A-4 260 541 describes plasticized PVC obtained by polymerization of vinyl chloride in the presence of polymeric plasticizers, e.g. of polyester type, and a small amount of cross-linking agents, e.g. triallyl isocyanurate, the role of which consists in the formation of a light polymeric network from PVC chains limiting the migration and extraction of polymeric plasticizers.

Also mixtures of graft copolymers, e.g. vinyl chloride grafted onto copolymers of ethylene with vinyl acetate and methyl, amyl or lauryl acrylate grafted onto PVC do not exhibit any migration (JP-B-57 195 138).

As may be taken from the above explanations, there were already numerous technical solutions for overcoming the problems of migration and extraction of plasticizers from plasticized PVC. Disadvantages of these known procedures are the higher demands for their performances and/or the utilization or more expensive raw materials, which leads to an increase of the production costs.

It is the object of the present invention to provide new monomers and polymers which can be used for internal plastification of polymers, particularly PVC, methods for preparing these monomers and polymers/copolymers and the resulting internally plasticized homo- and copolymers, in particular on the basis of PVC.

The above object is achieved according to the claims. The dependent claims relate to preferred embodiments.

The principle of the solution according to the invention according to which PVC comprising a completely non-migrating plasticizer resides in the fact that the plasticizing component is chemically bond to the other comonomer s.

The present invention provides capryloyloxyalkyl acrylates of the general formula I,

$CH_2=CH\text{-}CO\text{-}O\text{-}R\text{-}O\text{-}CO\text{-}(CH_2)_6\text{-}CH_3$ (I),

wherein R is an alkylene group with 2 to 6 carbon atoms, to their homopolymers, mutual copolymers, and copolymers with other comonomers, particularly vinyl chloride.

Advantageous examples for capryloyloxyalkyl acrylates of formula I according to the invention are capryloyloxyethyl acrylate and capryloyloxyhexyl acrylate.

The compounds for formula I can be prepared in accordance with the invention on two alternative ways, either by esterification of hydroxyl caprylates of the general formula II,

$HO\text{-}R\text{-}O\text{-}CO\text{-}(CH_2)_6\text{-}CH_3$ (II),

wherein R is an alkylene group having 2 to 6 carbon atoms,

with acrylic acid or a reactive acrylic acid derivative, or by esterification of hydroxyalkyl acrylates of the general formula III,

$CH_2 = CH\text{-}CO\text{-}O\text{-}R\text{-}OH$ (III),

wherein R is as defined above,

with caprylic acid or a reactive caprylic acid derivative.

The hydroxyalkyl caprylates of formula II are prepared according to the invention by

- reacting diols of the general formula IV,

HO-R-OH (IV),

wherein R is an alkylene group having 2 to 6 carbon atoms,

with caprylic acid or a reactive caprylic acid derivative,

- reacting a caprylic acid salt with a hydroxyalkyl halide of the formula IVa,

X-R-OH (IVa),

wherein

R is the same as defined above and

X is a halogen atom and particularly chloride or bromine,

- glycolysis of an ester of caprylic acid of the general formula V,

$R'-O-CO-(CH_2)_6-CH_3$ (V),

wherein R′ is any group derived from an alcohol and particularly an alkyl group having 2 to 6 carbon atoms, or of an alkylene dicaprylate of the general formula VI.

$CH_3-(CH_2)_6-CO-O-R-O-CCO-(CH_2)_6-CH_3$ (VI),

wherein R is as defined above,

with the respective diol of formula IV, preferably in the presence of an alkaline alkoxide and particularly of the respective sodium glycolate as catalyst,

or

- reaction of caprylic acid with the corresponding epoxide, particularly with ethylene oxide.

The hydroxyalkyl acrylates of formula III are prepared by reacting diols of formula IV,

HO-R-OH (IV),

wherein R is an alkylene group having 2 to 6 carbon atoms,

with acrylic acid or a reactive acrylic acid derivative.

Preferred reactive acid derivatives of acrylic acid and caprylic acid are the halides and in particular the corresponding chlorides or bromides; alternatively, acrylic acid anhydride and caprylic acid anhydride can be used as respective reactive acid derivatives.

The esterification reactions are preferably carried out in the presence of an aprotic nitrogen base, particularly in the presence of pyridine, triethylamine, dimethylaniline and/or quinoline.

The capryloyloxyalkyl acrylates are thus prepared from the corresponding alkandiols of formula IV according to the invention by twofold esterification, where capryloyl and acryloyl groups are successively introduced into the diol molecule. Although the twofold esterification may be carried out by any order of reactions, the procedure introducing first the capryloyl group and then acryloylating the compound of formula II is more advantageous because the possibility of undesired spontaneous polymerization during synthesis is smaller.

The capryloyloxyalkyl acrylates prepared according to the invention are used for the synthesis of polymeric compounds.

The polymers and copolymers according to the invention contain capryloyloxyalkyl acrylate structure units of the general formula VII,

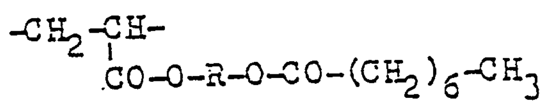

(VII),

wherein R is as defined above.

The preparation of homopolymers of capryloyloxyalkyl acrylates or their mutual copolymers (i.e. of polymers exclusively consisting of units of the general formula VII, whereby R is the same or different, or their copolymers with other radically polymerizable monomers, e.g. with alkyl acrylates or vinyl chloride, wherein the structure units of vinyl chloride may be in the main chain or in the side chains, are preferably prepared by radically initiated polymerization and copolymerization, advantageously up to conversions of from 55 to 95 %, particularly 70 to 90 %, at temperatures from 0 to 80° C and pressure corresponding to that of the reaction system at the polymerization temperature and isolating and processing polymers according to known methods.

The molecular mass of the polymers produced according to the invention may be controlled in the known way by suitably selecting the polymerization procedure of radical (co)polymerization (e.g. solution, emulsion, block, or suspension polymerization) or by using known molecular mass regulators, e.g. chlorine or sulfur derivatives such as trichloroethylene, tetrachloromethane, n-butylmercaptane, or dodecylmercaptane.

An advantage of the conception of the invention is that the plasticized polymer and particularly poly(vinyl chloride) prepared according to the invention contains plasticizer molecules - capryloyloxyalkyl acrylate structure units - incorporated by polymerization, which, accordingly, do not migrate and cannot be extracted due to their chemical bonding. This type of PVC is prepared directly in the polymerization

process and does not require, in contrast to classical procedures of preparation, mechanical processing of the polymer with plasticizers. The copolymers prepared according to the invention are new types of PVC, which are applicable, e.g., in building construction, industry and agriculture (various kinds of films, particularly earth-insulting films with long service life), food industry as packaging materials, or in medicine for materials coming into contact with infusion solutions or body liquids.

The homopolymers of capryloyloxyalkyl acrylates and their mutual copolymers may find use as substrates for graft copolymerization whereby grafted copolymers are formed.

The invention is further illustrated by way of examples.

The polymers of the examples are characterized by their composition (elemental analysis) and their molecular mass ($M_w$) which was measured in tetrahydrofuran by the method of light scattering. The extractibility of the plasticizing component from PVCs plasticized with copolymers of vinyl chloride with capryloyloxyalkyl acrylates was tested by extraction of samples with hexane in a Soxhlet apparatus for 8 hours.

Example 1

Synthesis of capryloyloxyethyl acrylate (COEA)

Reaction of 2-hydroxyethyl caprylate with acryloyl chloride

A solution of 2-hydroxyethyl caprylate (HEC) (1 mol; 188,3 g) in pyridine (1,25 mol; 98,9 g; 100,7 ml) was added under continuous stirring at 5 to 10 ° C into a solution of freshly distilled acryloyl chloride (1,12 mol; 101,4 g) in benzene (300 ml). The mixture was further stirred for 2 hours at the reaction temperature and extracted with 800 ml of 2 % hydrochloric acid; the emulsion formed was broken by addition of ether, and the aqueous layer was repeatedly extracted with ether until no capryloyloxyethyl acrylate could be determined. The combined ether extracts were washed with water, a solution of potassium hydrogen carbonate ($KHCO_3$) and water and dried with magnesium sulfate ($MgSO_4$). The ether was removed by distillation under normal pressure, and the product was distilled after addition of octylpyrocatechol as an inhibitor. The overall yield of crude product was 74,9 %. The obtained fractions contained 60 to 93 % of capryloyloxyethyl acrylate. A product with a purity of 99,8 % was obtained by redistillation; b.p. 111 ° C/66,7 Pa.

| Elemental analysis for $C_{13}H_{22}O_4$: | | |
|---|---|---|
| | % C | % H |
| Calculated: | 64,44 | 9,15 |
| Found: | 64,23 | 9,41. |

The infrared and $^{13}$C-NMR spectra confirmed the expected structure

Example 2

Synthesis of capryloyloxyethyl acrylate

Reaction of sodium caprylate with 2-chloroethanol

Sodium caprylate (2 mol) was prepared by neutralization of caprylic acid (2 mol; 288,4 g; 317, 4 ml) in 750 ml of xylene with sodium hydroxide (2 mol; 80 g) in water (160 ml). The reaction mixture was freed of water and then heated with chloroethanol (2,1 mol; 170 g; 204,4 ml) with addition of 2-ethoxyethanol (1000 ml) as a solvent under reflux for 28 hours. The precipitated NaCl was filtered off and washed with 2-ethoxyethanol. The filtrate was distilled, and 2-hydroxyethyl caprylate was obtained; yield 66 %; b.p. 141 °C/266 Pa.

| Elemental analysis for $C_{10}H_{20}O_3$: | | |
|---|---|---|
| | % C | % H |
| Calculated: | 63,79 | 10,71 |
| Found: | 63,54 | 10,93. |

The structure was confirmed by infrared and $^{13}$C-NMR spectroscopy. The further procedure was carried out according to example 1.

Example 3

Synthesis of capryloyloxyethyl acrylate

Glycolis of ethylene dicaprylate

Sodium metal (0,01 mol; 0,23 g) was dissolved in anhydrous ethylene glycol (3 mol; 186 g), and then ethylene dicaprylate (1 mol; 314 g) was added, and the reaction mixture was heated for 5 hours under reflux (according to TLC analysis, ethylene dicaprylate disappeared from the reaction mixture already after 2 hours). The yield of 2-hydroxyethyl caprylàte was 92 %. The further procedure was carried out according to example 1.

Example 3

Synthesis of capryloxyethyl acrylate

Glycolysis of ethylene dicaprylate

Sodium metal (0,01 mol; 0,23g)was dissolved in anhydrous ethylene glycol (3 mol; 186 g), and then ethylene dicaprylate (1 mol; 314 g) was added, and the reaction mixture was heated for 5 hours under reflux (according to TLC analysis, ethylene dicaprylate disappeared from the reaction mixture already after 2 hours). The yield of 2-hydroxyethyl caprylate was 92 %. The further procedure was carried out according to example 1.

Example 4

Synthesis of capryloyloxyethyl acrylate

Reaction of ethylene glycol with capryloyl chloride

Capryloyl chloride (0,602 mol; 98 g) was dropwise added during 1,5 h into a mixture of ethylene glycol (3 mol; 186 g) and pyridine (0,6 mol; 47,4 g). The mixture was further stirred for 2 hours at laboratory temperature, allowed to stand overnight, and three times extracted with benzene (100 + 50 + 25 ml). The benzene extract was shaken with a 10 % aqueous solution of $NaHCO_3$ (2 x 30 ml), and then water and benzene were evaporated in a rotation evaporator. Distillation of the residue gave 4 crude fractions with a

purity of 79,9 to 97,9 %; the overall yield of 2-hydroxyethyl caprylate was 79,5 %. The further procedure was carried out according to example 1.

Example 5

Synthesis of capryloxyethyl acrylate

Reaction of ethylene glycol with caprylic anhydride

Caprylic acid anhydride (0,477 mol; 129 g) was dropwise added to boiling dry ethylene glycol (3,16 mol; 196 g), and the mixture was refluxed for further 4 hours. The mixture was then cooled and extracted twice with benzene (100 + 20 ml); the benzene was evaporated in a rotation evaporator, and the residue was distilled. 2-Hydroxyethyl caprylate was obtained in a yield of 142,75 g (159 % of theory), which is an evidence that almost 2/3 of the caprylic acid formed were esterified with glycol under the experimental conditions. The raw fractions had a purity of 88,9 to 97,5 %, based on 2-hydroxyethyl caprylate. The further procedure was carried out according to example 1.

Example 6

Synthesis of capryloyloxyethyl acrylate

Reaction of caprylic acid with ethylene glycol

Three fractions containing 68,6 to 97,8 % of 2-hydroxyethyl caprylate were obtained by heating caprylic acid (1,25 mol; 180 g) with ethylene glycol (8,27 mol; 513,4 g) to the boiling temperature for 5 hours and gradual distillation; the overall yield of 2-hydroxyethyl caprylate was 61,3 %. In addition to 2-hydroxyethyl caprylate, ethylene dicaprylate was formed from 21 % of the caprylic acid. In a similar experiment, the reaction mixture after 7 hours of heating was first extracted with benzene, whereupon the benzene extract was extracted with water, instead of direct distillation. 60,6 % of the caprylic acid were consumed for 2-hydroxyethyl caprylate, whereas ethylene dicaprylate resulted from 21,5 % of the acid; distillation gave fractions of crude product containing 97,6 to 98,5 % of 2-hydroxyethyl caprylate. The further procedure was carried out according to example 1.

Example 7

Synthesis of capryloyloxyethyl acrylate

Acid catalyzed azeotropic esterification of ethylene glycol with caprylic acid and an entrainer lighter than reaction water

A mixture of caprylic acid (8 mol; 1153,8 g; 1269,5 ml), ethylene glycol (8 mol; 1003,2 g; 901,3 ml), p-toluenesulfonic acid (0,233 mol; 40 g), and benzene (800 ml) was boiled under a universal azeotropic adaptor for 8,25 hours. The mixture was then cooled, extracted with water, a solution of $NaHCO_3$, and again with water. The emulsion was broken by addition of ether. The product having a b.p. of 124 to 127° C/266 Pa was obtained in a yield of 900 g (60 %): The further procedure was carried out according to example 1.

Example 8

Synthesis of capryloyloxyethyl acrylate

Azeotropic esterification of ethylene glycol with caprylic acid and an entrainer heavier than reaction water

A mixture of caprylic acid (8,3 mol; 1200 g), ethylene glycol (54,6 mol; 3423,3 g) and chloroform (1470 g; 1000 ml) was boiled under a universal azeotropic adaptor. After removal of the solvent by distillation, ethylene glycol was distilled off at 2 kPa. The yield of crude 2-hydroxyethyl caprylate was 1330,4 g (85 %) with a purity of 93 %. The further procedure was carried out according to example 1.

Example 9

Synthesis of capryloyloxyhexyl acrylate (COHA)

Reaction of caprylic acid with 1,6-hexandiol

A mixture of caprylic acid (110,5g; 0,7662 mol) and 1,6-hexandiol (600 g; 5,077 mol) was heated to a maximal temperature of 200° C for 5 hours, while 25 g of organic volatile compounds and water were removed by distillation. The excess of 1,6-hexandiol was distilled off in vacuo, and the residue was cooled and diluted with benzene (750 ml). The benzene solution was extracted with water (3 x 250 ml), the solvent was evaporated, and the product was distilled through a short empty column (100 x 25mm). The 6-hydroxyhexyl caprylate (HHC) obtained had a b.p. of 120° C/8 Pa. The main fraction containing 98,6 % of HHC was obtained in a yield of 157,2 g (84 %).

| Elemental analysis for $C_{14}H_{28}O_3$: | | |
|---|---|---|
| | % C | % H |
| Calculated: | 68,81 | 11,55 |
| Found: | 68,65 | 11,72. |

The infrared and $^{13}$C-NMR spectrum confirmed the structure of HHC.

Acryloylation of HHC was carried out by the procedure described in example 1. The yield of crude COHA was 77,2 %. Redistillation gave the product with a purity of 99,7 % COHA; b.p. 145° C/26,6 Pa.

| Elemental analysis for $C_{17}H_{30}O_4$: | | |
|---|---|---|
| | % C | % H |
| Calculated: | 68,42 | 10,13 |
| Found: | 68,31 | 10,22. |

The structure of COHA was confirmed by IR and $^{13}$C-NMR spectroscopy.

Example 10

Polymerization of vinyl chloride

A 1-dm$^3$ stainless-steel jacketed reactor equipped with a horse-shoe stirrer and breakers was charged with 300 g of vinyl chloride, 550 g of distilled water, 35 g of a 3,8 % aqueous solution of hydroxypropyl methyl cellulose, and 0,48 g of dicetyl peroxydicarbonate. The polymerization was carried out at 52,5° C

and a stirring speed of 500 $min^{-1}$ for 6 hours. The polymer obtained was dried at 40 °C in stainless-steel dishes lined with filtration paper to a constant mass. The polymerization gave 225 g of PVC (conversion 75 %) with a molecular mass $\overline{M}_w$ of 135 000.

Example 11

A1-$dm^3$ round-bottom glass flask provided with a reflux condenser was charged with 270 g of benzene, 30 g of capryloyloxyethyl acrylate and 0,3 g of benzoyl peroxide. The polymerization was carried out in argon atmosphere at 80 °C for 10 hours under stirring with a magnetic stirrer. After the polymerization was completed, the polymer was precipitated by pouring into 3 $dm^3$ methanol. The precipitation solution was decanted, and the residues of benzene and methanol were removed from the polymer by evaporation in the vacuum of a water-jet pump and an oil pump. The obtained polymer was twice reprecipitated in a cold tetrahydrofuran-methanol system and dried; the yield was 17,2 g (57,3 % of theory). The polymer had a molecular mass $\overline{M}_w$ of 12 500.

Example 12

The polymerization was carried out by the same procedure as in example 11, with the distinction that half of the amount of capryloyloxyethyl acrylate was replaced by the same amount of capryloyloxyhexyl acrylate. The polymer was obtained in a yield of 18,3 g (61 % of theory) and had a molecular mass $\overline{M}_w$ of 14 000. The composition did correspond to the concentration of the two acrylates in the polymerization batch.

Examples 13-21

The polymerizations were carried out in the same way as in example 10, with the exception that a part of the vinyl chloride in the polymerization batch was replaced by the same mass of capryloyloxyethyl acrylate (COEA), and the copolymerization was carried out either without or with addition of a molecular mass regulator (Table I). Powdery samples (5 g) from examples 15-21 were extracted with hexane in a Soxhlet apparatus for 8 hours without any loss of COEA structure units.

Table I

Copolymerization of vinyl chloride with capryloyloxyethyl acrylate (COEA) in an aqueous suspension at 52,5 °C; $[COEA]_o$ and $[COEA]_c$ are the concentrations of COEA in the organic phase of the polymerization batch and in the copolymer, respectively; $\tau$ is the polymerization time, and $\overline{M}_w$ the molecular mass.

| Example | $[COEA]_o$ (mass-%) | $[COEA]_c$ (mass-%) | $\tau$ (h) | Conversion (%) | $\overline{M}_w x10^{-3}$ |
|---|---|---|---|---|---|
| 10 | 0 | 0 | 6 | 75 | 135 |
| 13 | 0,8 | 1,2 | 6 | 77 | 127 |
| 14 | 10,5 | 12,8 | 6 | 83 | 350 |
| 15[a] | 11,3 | 15,1 | 6 | 75 | 130 |
| 16 | 21,0 | 25,4 | 5 | 83 | 900 |
| 17[a] | 21,0 | 28,4 | 5 | 74 | 150 |
| 18 | 28,0 | 31,7 | 5 | 88 | 1130 |
| 19 | 28,0 | 42,0 | 3,75 | 67 | 1050 |
| 20 | 35,0 | 39,0 | 4,50 | 90 | 1010 |
| 21 | 35,0 | 50,1 | 3,50 | 70 | 1200 |

[a]Polymerization with addition of 0,03 mass-% of trichloroethylene (based on the total mass of the comonomer mixture) as a molecular mass regulator.

Example 22

The polymerization was carried out by the same procedure as in example 10, with the exception that a part of the vinyl chloride in the polymerization batch was replaced by the same mass of capryloyloxyhexyl acrylate (COHA). The organic phase of the polymerization batch contained 21 mass-% of COHA and 0,03 mass-% of trichloroethylene; the polymerization time was 5 hours. There were obtained 228 g of copolymer (conversion 76 %) which contained 27,6 mass-% of COHA structure units and had a molecular mass $\overline{M}_w$ of 145 000. The powdery sample (5 g) was extracted for 8 hours with hexane in a Soxhlet apparatus, and no loss of COHA structure units was observed.

Example 23-25

The polymerizations were carried out by the same method as in example 10, with the exception that a part of the vinyl chloride in the polymerization batch was replaced by the same mass of poly-(capryloyloxyethyl acrylate) (PCOEA) prepared according to example 11 or of the copolymer of capryloyloxyethyl acrylate with capryloyloxyhexyl acrylate (PCOEHA) prepared according to example 12 (Table II). During extraction of powdery sample with hexane, the content of acrylate component did not decrease.

Table II

Polymerization of vinyl chloride in the presence of poly(capryloyloxyethyl acrylate) (PCOEA) or a copolymer of capryloyloxyethyl acrylate with capryloyloxyhexyl acrylate (PCOEHA) in an aqueous suspension at 52,5 °C; $[P]_o$ and $[P]_c$ are the concentrations of PCOEA or PCOEHA in the organic phase of the polymerization batch and in the polymer, respectively, $\tau$ is the polymerization time, and $M_w$ the molecular mass.

| Example | $[P]_o$ (mass-%) | $[P]_c$ (mass-%) | $\tau$ (h) | Conversion (%) | $\bar{M}_w x10^{-3}$ |
|---|---|---|---|---|---|
| 23 | 11,3 (PCOEA) | 14,0 (PCOEA) | 4,25 | 81 | 140 |
| 24 | 21,0 (PCOEA) | 25,1 (PCOEA) | 4,25 | 84 | 150 |
| 25 | 21,0 (PCOEHA) | 25,3 (PCOEHA) | 4,25 | 84 | 130 |

Example 26

A 1-$dm^3$ stainless-steel jacketed reactor equipped with a horse-shoe agitator and breakers was charged with 236 g of vinyl chloride, 6,8 g of capryloyloxyethyl acrylate, 550 g of distilled water, 35 g of a 3,8 mass-% aqueous solution of hydroxyethyl propyl methyl cellulose, and 0,48 g of dicetyl peroxydicarbonate. The polymerization mixture was stirred at a speed of 500 $min^{-1}$, and, after the reaction temperature had reached 52,5 °C (within 5 min), 57,3 g of capryloyloxyethyl acrylate were dosed into the polymerizing system during 4 hours. The total polymerization time was 5 hours; the polymer was then isolated and further treated by the same method as in example 10. The copolymer was obtained in a yield of 198 g (66 % of theory), contained 32,3 mass-% of capryloyloxyethyl acrylate structure units, and had a molecular mass $\overline{M}_w$ of 850 000.

Example 27

The polymerization was carried out in the same way as in example 26, with the exception that 3 g of trichloroethylene were added into the polymerization batch, and 6 g of trichloroethylene were dosed into the polymerizing system together with capryloyloxyethyl acrylate. The total amount of added trichloroethylene was 0,03 mass-%, based on the total mass of copolymerized monomers. The total polymerization time was 6 hours. The copolymer was obtained in a yield of 201 g (67 % of theory), contained 31,9 mass-% of capryloyloxyethyl acrylate structure units, and had a molecular mass $\overline{M}_w$ of 140 000. No loss of capryloyloxyethyl acrylate structure units took place by extraction of 5 g powdery sample with hexane.

**Claims**

1. Capryloyloxyalkyl acrylates of the general formula I,
$CH_2=CH\text{-}CO\text{-}O\text{-}R\text{-}O\text{-}CO\text{-}(CH_2)_6\text{-}CH_3$ (I),
wherein R is an alkylene group having 2 to 6 carbon atoms.

2. Capryloyloxyethyl acrylate.

3. Capryloyloxyhexyl acrylate.

4. A method for the preparation of capryloyloxyalkyl acrylates of the general formula I,

$CH_2=CH\text{-}CO\text{-}O\text{-}R\text{-}O\text{-}CO\text{-}(CH_2)_6\text{-}CH_3$ (I),

wherein R is an alkylene group with 2 to 6 carbon atoms,

**characterized by**

- esterification of hydroxyalkyl caprylates of the general formula II,

$HO\text{-}R\text{-}O\text{-}CO\text{-}(CH_2)_6\text{-}CH_3$ (II),

wherein R is an alkylene group with 2 to 6 carbon atoms, with acrylic acid or a reactive acrylic acid derivative,

or

esterification of hydroxyalkyl acrylates of the general formula III,

$CH_2=CH\text{-}CO\text{-}O\text{-}R\text{-}OH$ (III),

wherein R is as defined above, with caprylic acid or a reactive caprylic acid derivative.

5. The method according to claim 4,
characterized in that
the hydroxyalkyl caprylates of formula II are prepared by

- reacting diols of the general formula IV,

$HO\text{-}R\text{-}OH$ (IV),

wherein R is an alkylene group having 2 to 6 carbon atoms, with caprylic acid or a reactive caprylic acid derivative,

- reacting a caprylic acid salt with a hydroxyalkyl halide of the formula IVa,

$X\text{-}R\text{-}OH$ (IVa),

wherein R is the same as defined above and X is a halogen atom and particularly chlorine or bromine,

- glycolysis of an ester of caprylic acid of the general formula V,

$R'\text{-}O\text{-}CO\text{-}(CH_2)_6\text{-}CH_3$ (V),

wherein $R'$ is any group derived from an alcohol and particularly an alkyl group having 2 to 6 carbon atoms, or of an alkylene dicaprylate of the general formula VI,

$CH_3\text{-}(CH_2)_6\text{-}CO\text{-}O\text{-}R\text{-}O\text{-}CO\text{-}(CH_2)_6\text{-}CH_3$ (VI),

wherein R is as defined above, with the respective diol of formula IV

cr

- reaction of caprylic acid with the corresponding epoxide, particularly with ethylene oxide.

6. The method according to claim 4,
characterized in that
the hydroxyalkyl acrylates of formula III are prepared by reacting diols of formula IV,

$HO\text{-}R\text{-}OH$ (IV)

wherein R is an alkylene group having 2 to 6 carbon atoms, with acrylic acid or a reactive acrylic acid derivative.

7. The method according to one of claims 4 to 6,
characterized in that
acryloyl halides of capryloyl halides, particularly the corresponding chlorides or bromides, or acrylic acid anhydride or caprylic acid anhydride are used as respective reactive acid derivates.

8. The method according to one of claims 4 to 7,
characterized in that
the esterification is carried out in the presence of an aprotic nitrogen base.

9. The method according to one of claims 4 to 8,
characterized in that
the esterification is carried out in the presence of pyridine, triethylamine, dimethylaniline and/or quinoline.

10. Polymers and copolymers containing capryloyloxyalkyl acrylate structure units of the general formula VII.

$$\begin{array}{l} -CH_2-\underset{|}{C}H- \\ \quad\quad\;\; CO-O-R-O-CO-(CH_2)_6-CH_3 \end{array} \qquad (VII),$$

wherein R is an alkylene group having 2 to 6 carbon atoms.

11. Polymers according to claim 10,
characterized in that
they contain 100 % of units of the general formula V, where the groups R are identical or different.

12. Copolymers according to claim 10,
characterized in that
they contain comonomer units derived from copolymerizable acrylic and/or vinylic comonomers in the main and/or in the side chains.

13. Copolymers according to claim 10 to 12,
characterized in that
they contain vinyl chloride units as comonomer units.

14. A method for producing the polymers according to one of claims 10 to 13,
characterized in that capryloyloxyalkyl acrylates of the general formula I according to one of claims 1 to 3 are polymerized or copolymerized with one or more comonomers derived from copolymerizable acrylic and/or vinylic comonomers and particularly vinyl chloride in solution or aqueous dispersion at temperatures of from 0 to 80 °C.

15. A method for producing the copolymers according to claim 10, 12 or 13,
characterized in that
one or more comonomers derived from copolymerizable acrylic and/or vinylic comonomers and particularly vinyl chloride are polymerized under conditions of radical polymerization in the presence of poly-(capryloyloxyalkyl acrylates) at temperatures of from 0 to 80 °C.